# FASCICULE DE BREVET EUROPEEN

(11) **EP 4 771 706 B1**
(45) Date de publication et mention de la délivrance du brevet: **25.11.2026**
(21) Numéro de dépôt: 25805227.3
(22) Date de dépôt: 17.11.2025
(51) Int. Cl.: H01M 50/107, H01M 50/152

(54) **BOITIERS DE CELLULES ÉLECTROCHIMIQUES CYLINDRIQUES**
ZYLINDRISCHE ELEKTROCHEMISCHE ZELLENGEHÄUSE
HOUSINGS OF CYLINDRICAL ELECTROCHEMICAL CELLS

(30) Priorité: 15.11.2024 FR 2412522
(43) Date de publication de la demande: 08.07.2026
(73) Titulaire: Verkor, 38000 Grenoble (FR)
(72) Inventeur: ACOSTA LAISEQUILLA, Rafael, 38000 Grenoble (FR)
(74) Mandataire: Novagraaf Group
(86) Numéro de dépôt international: PCT/IB2025/061743
(87) Numéro de publication internationale: WO 2026/105083

(56) Documents cités:
- CN-A- 112 909 391
- CN-A- 118 099 634

## Description

La présente invention a trait au domaine technique des cellules électrochimiques cylindriques des batteries électriques, et plus particulièrement aux boitiers de telles cellules.

Une cellule électrochimique cylindrique comprend un boîtier cylindrique (ou « casing» en anglais) logeant un empilement cylindrique, lequel comporte successivement une première feuille d'électrode, un premier séparateur, une deuxième feuille d'électrode de polarité opposée à la première, et un deuxième séparateur. Un électrolyte remplit au moins partiellement le boitier, imprégnant l'empilement cylindrique.

Le boîtier cylindrique comprend un couvercle (plus connu sous son nom anglais « Lid »), un fond et une enveloppe latérale cylindrique assemblée à la fois au fond et au couvercle, le plus souvent par soudure.

Dans cet assemblage, l'enveloppe latérale cylindrique est d'abord fixée de manière étanche au couvercle, formant ainsi un récipient apte à recevoir l'empilement cylindrique. Cette fixation doit être non seulement étanche à l'électrolyte, mais aussi maintenir l'intégrité structurelle sous des conditions de fonctionnement variées de la cellule électrochimique.

Bien que le processus soit automatisé, la réalisation de cette fixation demeure particulièrement fastidieuse, ralentissant ainsi la cadence de production des cellules électrochimiques cylindriques. Un alignement précis du couvercle et de l'enveloppe latérale cylindrique est en effet essentiel pour garantir que les bords à souder soient en contact adéquat sur toute leur longueur. Un mauvais alignement, même minime, peut entraîner des imperfections dans la soudure, voire des fuites, compromettant ainsi l'intégrité des cellules. En outre, la faible épaisseur du couvercle et de l'enveloppe latérale cylindrique rend cette étape d'assemblage encore plus délicate. Des boîtiers cylindriques connus sont décrits dans CN 112909391 A et CN 118099634 A.

Un objectif de la présente invention est d'assurer un contact correct et rapide, tout en garantissant une fixation sécurisée entre le couvercle et l'enveloppe latérale cylindrique.

A cet effet, il est proposé une cellule électrochimique comprenant
- un empilement cylindrique comportant successivement une première feuille d'électrode, un premier séparateur, une deuxième feuille d'électrode de polarité opposée à la première feuille d'électrode, et un deuxième séparateur;
- un boîtier logeant ledit empilement cylindrique, ce boîtier intégrant une enveloppe latérale cylindrique s'étendant entre une première extrémité et une deuxième extrémité opposée à la première extrémité,
- un couvercle rapporté et fixé à la première extrémité ,
   la première extrémité comprenant, dans une direction allant de cette première extrémité vers la deuxième extrémité, une première portion qui s'étend selon un axe longitudinal de la cellule, prolongée par une deuxième portion inclinée par rapport à l'axe longitudinal vers l'intérieur du boîtier et définissant une assise annulaire contre laquelle prend appui le couvercle;
   le couvercle comprenant une face interne tournée vers l'intérieur du boîtier, cette face interne comprenant un segment incliné par rapport à l'axe longitudinal destiné à venir en appui contre la deuxième portion, un segment périphérique annulaire s'étendant sensiblement parallèlement à l'axe longitudinal destiné à coopérer avec ladite première portion.

Diverses caractéristiques supplémentaires peuvent être prévues, seules ou en combinaison :
- la première portion a une épaisseur comprise entre 1/4 et 3/4, ou entre 1/3 et 2/3 de l'épaisseur de l'enveloppe latérale ou, de préférence, égale à la moitié de l'épaisseur de l'enveloppe latérale, lesdites épaisseurs étant mesurées selon un axe radial sensiblement perpendiculaire à l'axe longitudinal ;
- la première portion présente une longueur comprise entre 0,7 et 0,9 fois l'épaisseur totale du couvercle ou, de préférence, sensiblement égale à 0,8 fois l'épaisseur totale du couvercle, ladite longueur et ladite épaisseur étant mesurées selon l'axe longitudinal ;
- la deuxième portion définit un angle compris entre 30 et 45 degrés avec l'axe longitudinal, vers l'intérieur du boîtier (2) ;
- le segment incliné définit un angle avec l'axe longitudinal compris entre 30 et 45 degrés ;
- le segment périphérique présente une longueur mesurée selon l'axe longitudinal comprise entre 0,2 et 0,3 millimètres ;
- la longueur du segment périphérique est sensiblement égale à 0,25 millimètres ;
- la première portion présente un diamètre intérieur, et le segment périphérique présente un diamètre extérieur compris entre le diamètre intérieur moins 0,05 millimètres et le diamètre intérieur moins 0,15 millimètres, le diamètre intérieur et le diamètre extérieur étant mesurés selon un axe radial perpendiculaire à l'axe longitudinal ;
- le diamètre extérieur est sensiblement égal audit diamètre intérieur moins 0,1 millimètres ;
- l'empilement cylindrique est destiné à être inséré dans le boîtier par la première extrémité ;
- le segment incliné est orienté vers un axe central du couvercle, dans une direction allant de la première extrémité vers la deuxième extrémité.

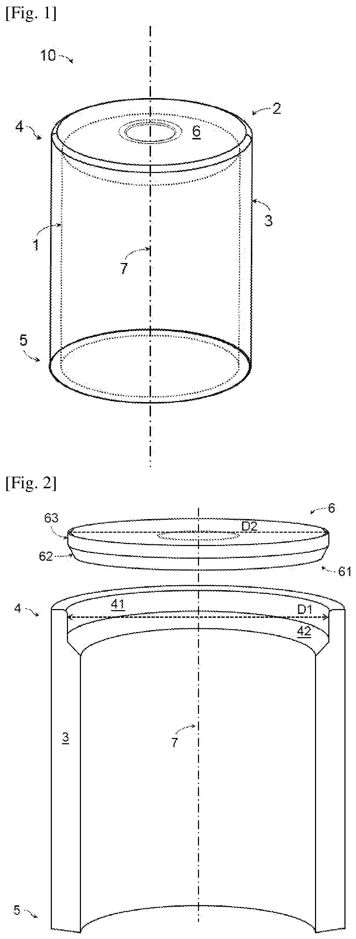

D'autres caractéristiques et avantages de l'invention apparaîtront plus clairement et de manière concrète à la lecture de la description ci-après de modes de réalisation, laquelle est faite en référence aux dessins annexés dans lesquels :
la figure [Fig.1] illustre schématiquement des éléments d'une cellule électrochimique selon divers modes de réalisation;
la figure [Fig.2] illustre schématiquement un élément en coupe d'une cellule électrochimique selon divers modes de réalisation.

En se référant à la [Fig.1], il est affiché une cellule **10** électrochimique comprenant un empilement **1** sensiblement cylindrique comportant successivement une première feuille d'électrode, un premier séparateur, une deuxième feuille d'électrode de polarité opposée à la première feuille d'électrode, et un deuxième séparateur.

L'empilement **1** cylindrique est, dans un mode de réalisation, obtenu par enroulement ou bobinage autour d'un mandrin d'une anode, d'un premier séparateur, d'une cathode et d'un deuxième séparateur. Un premier collecteur de courant et un deuxième collecteur de courant sont, respectivement, reliés à la première feuille d'électrode et à la deuxième feuille d'électrode. Ces composants ne sont pas représentés parce qu'ils sont connus.

Un boîtier **2** cylindrique loge l'empilement **1** cylindrique. Ce boîtier **2** intègre une enveloppe **3** latérale cylindrique s'étendant entre une première extrémité **4** et une deuxième extrémité **5** opposée à la première extrémité **4.**

Un couvercle **6** rapporté est fixé à la première extrémité **4** du boîtier **2.** Ce couvercle **6** métallique est, le plus souvent, fixé par soudure à la première extrémité **4** du boîtier **2.** Le couvercle **6** est connecté au premier collecteur de courant, formant ainsi une première borne de la cellule **10** électrochimique. L'empilement **1** cylindrique est destiné à être inséré dans le boîtier **2** par la première extrémité **4.**

En se reportant à la [Fig.2], la première extrémité **4** du boîtier **2** comprend, dans une direction allant de cette première extrémité **4** vers la deuxième extrémité **5,** une première portion **41** qui s'étend selon un axe **7** longitudinal de la cellule **10** électrochimique, prolongée par une deuxième portion **42** inclinée par rapport à l'axe **7** longitudinal vers l'intérieur du boîtier **2.** La deuxième portion **42** définit une assise annulaire contre laquelle prend appui le couvercle **6.** L'axe **7** longitudinal est un axe de révolution de l'enveloppe **3** latérale cylindrique ou, de manière équivalente, du boîtier **2.** Cet axe **7** longitudinal est également un axe central ou de révolution du couvercle **6** rapporté lorsqu'il est fixé à l'enveloppe **3** latérale. La première portion **41** est située plus près de la première extrémité **4** que la deuxième portion **42** inclinée. En allant de la première extrémité **4** vers la deuxième extrémité **5,** l'enveloppe **3** comporte une portion rectiligne **41** coaxiale à l'axe longitudinal **7,** prolongée axialement par une portion **42** inclinée dirigée vers l'intérieur de l'enveloppe **3.** La deuxième portion **42** inclinée est orientée vers l'intérieur du boitier 2, dans une direction allant de la première extrémité **4** vers la deuxième extrémité **5.**

Dans un mode de réalisation illustré par la [Fig.2], la première portion **41** correspond à un épaulement interne annulaire à la première extrémité **4** de l'enveloppe **3** latérale. La deuxième portion **42** correspond à un chanfrein orienté vers l'intérieur du boîtier **2.** Dans une direction allant de la première extrémité **4** vers la deuxième extrémité **5,** la deuxième portion **42** s'étend à partir de la première portion **41** vers l'intérieur du boîtier **2.** Autrement, la première portion **41** et la deuxième portion **42** représentent, respectivement, un épaulement avec une réduction d'épaisseur interne et une transition adoucie vers l'intérieur du boîtier **2.** La deuxième portion **42** forme, à l'intérieur du boîtier **2,** une surface d'appui pour le couvercle **6** rapporté.

Avantageusement, la première et la deuxième portion **41, 42** assurent un contact correct garantissant une fixation sécurisée entre le couvercle **6** rapporté et l'enveloppe **3** latérale cylindrique du boîtier **2.** La première et la deuxième portion **41, 42** permettent, en outre, de renforcer la fixation du couvercle **6** à l'enveloppe **3** latérale.

Dans un mode de réalisation, la première portion **41** a une épaisseur comprise entre 1/4 et 3/4, ou entre 1/3 et 2/3 de l'épaisseur de l'enveloppe **3** latérale ou, de préférence, égale à la moitié de l'épaisseur de l'enveloppe **3** latérale, ces épaisseurs étant mesurées selon un axe radial sensiblement perpendiculaire à l'axe **7** longitudinal. Avantageusement, une réduction contrôlée de l'épaisseur de l'enveloppe **3** latérale à sa première extrémité **4** permet de garantir une résistance structurelle nécessaire de la première portion **41** et une deuxième portion **42** définissant une assise annulaire suffisante pour supporter le couvercle **6** rapporté.

Dans un autre mode de réalisation, la première portion **41** présente une longueur comprise entre 0,7 et 0,9 fois l'épaisseur totale du couvercle **6** ou, de préférence, sensiblement égale à 0,8 fois l'épaisseur totale du couvercle **6.** La longueur de la première portion **41** et l'épaisseur totale du couvercle **6** sont mesurées selon l'axe **7** longitudinal. Une telle longueur de la première portion **41** permet, avantageusement, d'ajuster la profondeur d'insertion du couvercle **6** rapporté dans l'enveloppe 3 latérale à sa première extrémité.

La deuxième portion **42** définit un angle compris entre 30 et 45 degrés avec l'axe **7** longitudinal (ou, avec un axe parallèle à celui-ci), vers l'intérieur du boîtier **2.** Il en résulte, avantageusement, un chanfrein contre lequel le couvercle **6** rapporté vient en appui stable, facilitant sa fixation à l'enveloppe **3** latérale cylindrique. Une telle inclinaison de la deuxième portion **42** par rapport à l'axe **7** longitudinal forme en effet une surface d'appui ou d'arrêt intérieure empêchant de façon durable le couvercle **6** rapporté d'aller plus loin que la profondeur souhaitée dans le boîtier **2.**

Par ailleurs, le couvercle **6** comprend une face **61** interne tournée vers l'empilement **1** ou, plus généralement, vers l'intérieur du boîtier **2.** Cette face **61** interne comprend un segment **62** incliné par rapport à l'axe **7** longitudinal. Dans une direction allant de la première extrémité 4 vers la deuxième extrémité 5, le segment **62** incliné est orienté vers l'axe central (ou l'axe de révolution) du couvercle **6.** Autrement dit, le segment **62** est incliné vers l'intérieur du couvercle **6** de manière convergente. Ce segment **62** incliné est destiné à venir en appui contre la deuxième portion **42.** Dans un mode de réalisation, le segment **62** incliné définit, avec l'axe **7** longitudinal, un angle compris entre 30 et 45 degrés. Plus généralement, le segment **62** incliné est apte et destiné à coopérer avec la deuxième portion **42.** La disposition de ce segment **62** incliné destiné à venir en appui contre la deuxième portion **42** facilite, avantageusement, la fixation du couvercle **6** à l'enveloppe **3** latérale cylindrique.

La face **61** interne du couvercle **6** comprend, en outre, un segment **6 3** périphérique annulaire (une bande ou une zone périphérique annulaire) qui s'étend sensiblement parallèlement à l'axe 7 longitudinal. Ce segment **6 3** périphérique est destiné à coopérer avec la première portion **4 1.** Dans une direction allant de la deuxième extrémité **5** vers la première extrémité **4,** le segment **62** incliné est prolongé par le segment **63** périphérique. Le segment **63** périphérique s'étend sensiblement parallèlement à l'axe **7** longitudinal à partir du segment **62** incliné.

Dans un mode de réalisation illustré par la [Fig.2], la face latérale cylindrique du couvercle **6** est, de préférence, chanfreinée sur 20% (ou, plus généralement, sur une proportion de 10% à 30%) de l'épaisseur totale du couvercle **6,** cette épaisseur totale étant mesurée parallèlement à un axe de révolution (ou un axe central) du couvercle **6.**

Dans un mode de réalisation, le segment **63** périphérique présente une longueur mesurée selon l'axe **7** longitudinal comprise entre 0,2 et 0,3 millimètres ou, de préférence, sensiblement égale à 0,25 millimètres. Une telle longueur du segment périphérique permet de garantir une résistance structurelle suffisante du couvercle **6.**

Dans un mode de réalisation, la première portion **41** présente un diamètre intérieur **D1.** Le segment **63** périphérique présente un diamètre extérieur **D2** compris entre le diamètre intérieur moins 0,05 millimètres (**D1**- 0,05mm) et le diamètre intérieur moins 0,15 millimètres (D1-0,15mm). Le diamètre intérieur **D1** et le diamètre extérieur D2 sont mesurés selon un axe radial perpendiculaire à l'axe **7** longitudinal.

De telles dimensions des diamètres **D1** et **D2** permettent, avantageusement, une disposition et un alignement optimaux entre le couvercle **6** et l'enveloppe **3** latérale à sa première extrémité **4.** Il en résulte avantageusement non seulement un renforcement de la fiabilité des cellules **10** électrochimiques, mais aussi une amélioration de la productivité.

## Revendications

1. Cellule (**10**) électrochimique comprenant
- un empilement (**1**) cylindrique comportant successivement une première feuille d'électrode, un premier séparateur, une deuxième feuille d'électrode de polarité opposée à la première feuille d'électrode, et un deuxième séparateur;
- un boîtier (**2**) logeant ledit empilement (**1**) cylindrique, ce boîtier (**2**) intégrant
une enveloppe (**3**) latérale cylindrique s'étendant entre une première extrémité (**4**) et une deuxième extrémité (**5**) opposée à la première extrémité (**4**),
- un couvercle (**6**) rapporté et fixé à la première extrémité (**4**), ladite cellule (**10**) étant **caractérisée en ce que**
- la première extrémité (**4**) comprend, dans une direction allant de cette première extrémité (**4**) vers la deuxième extrémité (**5**), une première portion (**41**) qui s'étend selon un axe (**7**) longitudinal de la cellule (**10**), prolongée par une deuxième portion (**42**) inclinée par rapport à l'axe (**7**) longitudinal vers l'intérieur du boîtier (**2**) et définissant une assise annulaire contre laquelle prend appui le couvercle (**6**) ;
- le couvercle (**6**) comprend une face (**61**) interne tournée vers l'intérieur du boîtier (**2**), cette face (**61**) interne comprenant un segment (**62**) incliné par rapport à l'axe (**7**) longitudinal destiné à venir en appui contre la deuxième portion (**42**), un segment (**63**) périphérique annulaire s'étendant sensiblement parallèlement à l'axe (**7**) longitudinal destiné à coopérer avec ladite première portion (**41**).

2. Cellule (**10**) électrochimique selon la revendication précédente, **caractérisé e en ce que** la première portion (**41**) a une épaisseur comprise entre 1/4 et 3/4, ou entre 1/3 et 2/3 de l'épaisseur de l'enveloppe (**3**) latérale ou, de préférence, égale à la moitié de l'épaisseur de l'enveloppe (**3**) latérale, lesdites épaisseurs étant mesurées selon un axe radial sensiblement perpendiculaire à l'axe (**7**) longitudinal.

3. Cellule (**10**) électrochimique selon la revendication 1 ou 2, **caractérisé e en ce que** la première portion (**41**) présente une longueur comprise entre 0,7 et 0,9 fois l'épaisseur totale du couvercle (**6**) ou, de préférence, sensiblement égale à 0,8 fois l'épaisseur totale du couvercle (**6**), ladite longueur et ladite épaisseur étant mesurées selon l'axe (**7**) longitudinal.

4. Cellule (**10**) électrochimique selon l'une quelconque des revendications précédentes, **caractérisé e en ce que** la deuxième portion (**42**) définit un angle compris entre 30 et 45 degrés avec l'axe (**7**) longitudinal, vers l'intérieur du boîtier (**2**).

5. Cellule (**10**) électrochimique selon l'une quelconque des revendications précédentes, **caractérisé e en ce que** le segment (**62**) incliné définit un angle avec l'axe (**7**) longitudinal compris entre 30 et 45 degrés.

6. Cellule (**10**) électrochimique selon l'une quelconque des revendications précédentes, **caractérisé e en ce que** le segment (**63**) périphérique présente une longueur mesurée selon l'axe (**7**) longitudinal comprise entre 0,2 et 0,3 millimètres.

7. Cellule (**10**) électrochimique selon l'une quelconque des revendications précédentes, **caractérisé e en ce que** la longueur du segment (**63**) périphérique est sensiblement égale à 0,25 millimètres.

8. Cellule (**10**) électrochimique selon l'une quelconque des revendications précédentes, **caractérisé e en ce que** la première portion (**41**) présente un diamètre intérieur, et **en ce que** le segment (**63**) périphérique présente un diamètre extérieur compris entre le diamètre intérieur moins 0,05 millimètres et le diamètre intérieur moins 0,15 millimètres, le diamètre intérieur et le diamètre extérieur étant mesurés selon un axe radial perpendiculaire à l'axe (**7**) longitudinal.

9. Cellule (**10**) électrochimique selon la revendication précédente, **caractérisé e en ce que** le diamètre extérieur est sensiblement égal audit diamètre intérieur moins 0,1 millimètres.

10. Cellule (**10**) électrochimique selon l'une quelconque des revendications précédentes, **caractérisée en ce que** l'empilement (**1**) cylindrique est destiné à être inséré dans le boîtier (2) par la première extrémité (**4**).

11. Cellule (**10**) électrochimique selon l'une quelconque des revendications précédentes, **caractérisée en ce que** le segment (62) incliné est orienté vers un axe central du couvercle (**6**), dans une direction allant de la première extrémité (**4**) vers la deuxième extrémité (**5**).

## Patentansprüche

1. Elektrochemische Zelle (**10**), umfassend
- einen zylindrischen Stapel (**1**) mit aufeinanderfolgend einem ersten Elektrodenblatt, einem ersten Separator, einem zweiten Elektrodenblatt mit entgegengesetzter Polarität zu dem ersten Elektrodenblatt und einem zweiten Separator;
- ein Gehäuse (**2**), das den zylindrischen Stapel (**1**) beherbergt, wobei dieses Gehäuse (**2**)
eine seitliche zylindrische Ummantelung (**3**) integriert, die sich zwischen einem ersten Ende (**4**) und einem zweiten Ende (**5**) entgegengesetzt zu dem ersten Ende (**4**) erstreckt,
- einen Deckel (**6**), der an dem ersten Ende (**4**) angebracht und befestigt ist, die Zelle (**10**) **dadurch gekennzeichnet, dass**
- das erste Ende (**4**) in einer von diesem ersten Ende (**4**) in Richtung des zweiten Endes (**5**) verlaufenden Richtung einen ersten Abschnitt (**41**) umfasst, der sich entlang einer Längsachse (**7**) der Zelle (**10**) erstreckt, an den sich ein zweiter Abschnitt (**42**) anschließt, der relativ zu der Längsachse (**7**) in Richtung des Inneren des Gehäuses (**2**) geneigt ist und eine ringförmige Auflagefläche definiert, gegen die der Deckel (**6**) zum Anliegen kommt;
- der Deckel (**6**) eine Innenfläche (**61**) umfasst, die dem Inneren des Gehäuses (**2**) zugewandt ist, wobei diese Innenfläche (**61**) ein Segment (**62**) umfasst, das relativ zu der Längsachse (**7**) geneigt ist und dazu bestimmt ist, an den zweiten Abschnitt (**42**) anzuliegen**,** und ein ringförmiges Umfangssegment (**63**), das sich im Wesentlichen parallel zu der Längsachse (**7**) erstreckt und dazu bestimmt ist, mit dem ersten Abschnitt (**41**) zusammenzuwirken**.**

2. Elektrochemische Zelle (**10**) nach dem vorstehenden Anspruch, **dadurch gekennzeichnet, dass** der erste Abschnitt (**41**) eine Dicke aufweist, die zwischen 1/4 und 3/4 oder zwischen 1/3 und 2/3 der Dicke der seitlichen Ummantelung (**3**) beträgt oder vorzugsweise gleich der Hälfte der Dicke der seitlichen Ummantelung (**3**) ist, wobei die Dicken entlang einer radialen Achse gemessen werden, die im Wesentlichen senkrecht zu der Längsachse (**7**) verläuft.

3. Elektrochemische Zelle (**10**) nach Anspruch 1 oder 2,
**dadurch gekennzeichnet, dass** der erste Abschnitt (**41**) eine Länge aufweist, die zwischen dem 0,7- und 0,9-Fachen der Gesamtdicke des Deckels (**6**) beträgt oder vorzugsweise im Wesentlichen gleich dem 0,8-Fachen der Gesamtdicke des Deckels (**6**) ist, wobei die Länge und die Dicke entlang der Längsachse (**7**) gemessen werden.

4. Elektrochemische Zelle (**10**) nach einem der vorstehenden Ansprüche, **dadurch gekennzeichnet, dass** der zweite Abschnitt (**42**) einen Winkel zwischen 30 und 45 Grad mit der Längsachse (**7**) in Richtung des Inneren des Gehäuses (**2**) definiert**.**

5. Elektrochemische Zelle (10) nach einem der vorstehenden Ansprüche, **dadurch gekennzeichnet, dass** das geneigte Segment (62) mit der Längsachse (7) einen Winkel zwischen 30 und 45 Grad definiert.

6. Elektrochemische Zelle (**10**) nach einem der vorstehenden Ansprüche, **dadurch gekennzeichnet, dass** das Umfangssegment (**63**) eine entlang der Längsachse (**7**) gemessene Länge zwischen 0,2 und 0,3 Millimetern aufweist.

7. Elektrochemische Zelle (**10**) nach einem der vorstehenden Ansprüche, **dadurch gekennzeichnet, dass** die Länge des Umfangssegments (**63**) im Wesentlichen gleich 0,25 Millimeter ist.

8. Elektrochemische Zelle (**10**) nach einem der vorstehenden Ansprüche, **dadurch gekennzeichnet, dass** der erste Abschnitt (**41**) einen Innendurchmesser aufweist, und **dadurch, dass** das Umfangssegment (**63**) einen Außendurchmesser aufweist, der zwischen dem Innendurchmesser minus 0,05 Millimeter und dem Innendurchmesser minus 0,15 Millimeter liegt, wobei der Innendurchmesser und der Außendurchmesser entlang einer radialen Achse senkrecht zu der Längsachse (**7**) gemessen werden.

9. Elektrochemische Zelle (**10**) nach dem vorstehenden Anspruch, **dadurch gekennzeichnet, dass** der Außendurchmesser im Wesentlichen gleich dem Innendurchmesser minus 0,1 Millimeter ist.

10. Elektrochemische Zelle (**10**) nach einem der vorstehenden Ansprüche, **dadurch gekennzeichnet, dass** der zylindrische Stapel (**1**) dazu bestimmt ist, durch das erste Ende (**4**) in das Gehäuse (2) eingesetzt zu werden**.**

11. Elektrochemische Zelle (**10**) nach einem der vorstehenden Ansprüche, **dadurch gekennzeichnet, dass** das geneigte Segment (62) zu einer Mittelachse des Deckels (**6**) hin ausgerichtet ist, in einer Richtung von dem ersten Ende (4) zu dem zweiten Ende (**5**)**.**

## Claims

1. An electrochemical cell **(10)** comprising
- a cylindrical stack **(1)** comprising in succession a first electrode sheet, a first separator, a second electrode sheet having an opposite polarity to the first electrode sheet, and a second separator;
- a housing (**2**) containing said cylindrical stack (**1**), this housing (**2**) incorporating
a cylindrical side shell (**3**) extending between a first end (**4**) and a second end (**5**) opposite the first end (**4**),
- a lid (**6**) added to and secured at the first end (**4**)**,** said cell (**10**) being **characterized in that**
- the first end (**4**) comprises, in a direction extending from this first end (**4**) toward the second end (**5**), a first portion (**41**) that extends along a longitudinal axis (**7**) of the cell (**10**), followed by a second portion (**42**) inclined relative to the longitudinal axis (**7**) toward the interior of the housing (**2**) and defining an annular seat against which the lid (**6**) rests;
- the lid (**6**) comprises an inner surface (**61**) facing the interior of the housing (**2**)**,** this inner surface (**61**) comprising a segment (**62**) inclined relative to the longitudinal axis (**7**) and designed to bear against the second portion (**42**)**,** an annular peripheral segment (**63**) extending substantially parallel to the longitudinal axis (**7**), designed to engage with said first portion (**41**)**.**

2. The electrochemical cell (**10**) according to the preceding claim,
**characterized in that** the first portion (**41**) has a thickness between 1/4 and 3/4, or between 1/3 and 2/3, of the thickness of the side shell (**3**), or, preferably, equal to half the thickness of the side shell (**3**), said thicknesses being measured along a radial axis substantially perpendicular to the longitudinal axis (**7**).

3. The electrochemical cell (**10**) according to claim 1 or 2,
**characterized in that** the first portion (**41**) has a length between 0.7 and 0.9 times the total thickness of the lid (**6**) or, preferably, substantially equal to 0.8 times the total thickness of the lid (**6**), said length and said thickness being measured along the longitudinal axis (**7**).

4. The electrochemical cell (**10**) according to any of the preceding claims, **characterized in that** the second portion (**42**) defines an angle of between 30 and 45 degrees with the longitudinal axis (**7**), toward the interior of the housing (**2**)**.**

5. The electrochemical cell (**10**) according to any of the preceding claims, **characterized in that** the inclined segment (**62**) defines an angle with the longitudinal axis (**7**) of between 30 and 45 degrees.

6. The electrochemical cell (**10**) according to any of the preceding claims, **characterized in that** the peripheral segment (**63**) has a length measured along the longitudinal axis (**7**) of between 0.2 and 0.3 millimeters.

7. The electrochemical cell (**10**) according to any of the preceding claims, **characterized in that** the length of the peripheral segment (**63**) is substantially equal to 0.25 millimeters.

8. The electrochemical cell (**10**) according to any of the preceding claims, **characterized in that** the first portion (**41**) has an inner diameter, **and in that** the peripheral segment (**63**) has an outer diameter between the inner diameter minus 0.05 millimeters and the inner diameter minus 0.15 millimeters, the inner diameter and the outer diameter being measured along a radial axis perpendicular to the longitudinal axis (**7**).

9. The electrochemical cell (**10**) according to the preceding claim, **characterized in that** the outer diameter is substantially equal to said inner diameter minus 0.1 millimeters.

10. The electrochemical cell (**10**) according to any of the preceding claims, **characterized in that** the cylindrical stack (**1**) is designed to be inserted into the housing (2) through the first end (**4**)**.**

11. The electrochemical cell (**10**) according to any of the preceding claims, **characterized in that** the inclined segment (62) is oriented toward a central axis of the lid (**6**)**,** in a direction extending from the first end (4) toward the second end (**5**)**.**
